# EUROPÄISCHE PATENTSCHRIFT

(11) **EP 2 288 902 B1**
(45) Veröffentlichungstag und Bekanntmachung des Hinweises auf die Patenterteilung: **22.05.2013**
(21) Anmeldenummer: 09757613.6
(22) Anmeldetag: 05.06.2009
(51) Int. Cl.: G01N 21/64, G01N 21/84, G01N 21/958, G01N 21/896, G01N 21/94

(54) **VORRICHTUNG ZUR BESTIMMUNG DER ELEMENTBELEGUNG AUF EINER GLASOBERFLÄCHE MITTELS FLUORESZENZ**
APPARATUS FOR DETERMINING THE ELEMENT COVERAGE ON A GLASS SURFACE USING FLUORESCENCE
DISPOSITIF DE DÉTERMINATION PAR FLUORESCENCE DE LA PRÉSENCE D'ÉLÉMENTS SUR UNE SURFACE DE VERRE

(30) Priorität: 05.06.2008 EP 08104278; 05.06.2008 DE 202008007542 U
(43) Veröffentlichungstag der Anmeldung: 02.03.2011
(73) Patentinhaber: Bohle AG, 42781 Haan (DE)
(72) Erfinder: OSTENDARP, Heinrich, 42781 Haan (DE); PIONTEK, Siegfried, 42349 Wuppertal (DE)
(74) Vertreter: Cohausz & Florack
(86) Internationale Anmeldenummer: PCT/EP2009/056926
(87) Internationale Veröffentlichungsnummer: WO 2009/147232

(56) Entgegenhaltungen:
- EP-A- 1 348 945
- EP-A- 1 602 920
- EP-A- 1 698 886
- WO-A-84/00609
- DE-U1- 29 700 253
- US-A- 3 956 630
- US-A1- 2002 195 571
- US-A1- 2007 238 161
- UVP INC., ULTRA-VIOLET PRODUCTS: "Use of ultraviolet lamps in identification of air/tin side of glass" UVP APPLICATION BULLETIN, UVP-AB-101, 1. Januar 1997 (1997-01-01), XP007906115
- "Tin Side Detector, Model #TS1300" ELECTRONIC DESIGN TO MARKET, INC. (EDTM, INC.), 7. August 2006 (2006-08-07), Seiten 1-4, XP007906116

## Beschreibung

Die Erfindung betrifft eine Vorrichtung zur Bestimmung der Elementbelegung auf einer Glasoberfläche, insbesondere zur Bestimmung der Zinnkontamination auf Floatglas, mit einer wenigstens eine UV-Leuchtdiode umfassende UV-Strahlquelle, deren UV-Strahlung das Element zur Fluoreszenz anregt, und mit einer Detektoreinheit (2) zur Detektion der Fluoreszenzstrahlung.

In der modernen Glasfertigung wird Flachglas, das z.B. als Fensterglas, aber auch als Vorprodukt für Spiegel- und Automobilglas eingesetzt wird, überwiegend (ca.95%) als Floatglas im Floatprozess hergestellt. Hierbei wird die gereinigte, bei 1.100 °C teigig-flüssige Glasschmelze in einem endlos-kontinuierlichen Prozess fortlaufend von einer Seite in ein längliches Bad aus flüssigem Zinn geleitet, welches in einer Schutzgasatmosphäre zur Vermeidung einer Oxidation gehalten wird. Auf der Oberfläche des flüssigen Zinns schwimmt das etwa 2/3 leichtere Glas und breitet sich wie ein Ölfilm gleichmäßig aus. Durch die Oberflächenspannung des Zinns und des flüssigen Glases bilden sich extrem glatte Oberflächen. Das am kühleren Ende des Bades erstarrte, noch ca. 600 °C warme Glas wird fortlaufend herausgezogen und durchläuft einen Kühlofen, in welchem es verspannungsfrei heruntergekühlt wird. Nach einer optischen Qualitätskontrolle wird das Glas schließlich geschnitten.

Die besonderen Eigenschaften von Zinn qualifizieren es in besonderer Weise für den Einsatz bei der Floatglasherstellung. So hat Zinn mit 232 °C einen vergleichsweise niedrigen Schmelzpunkt, so dass es bis zum völligen Erstarren des Glases noch flüssig bleibt; ferner hat es bei den verwendeten 1.100 °C noch keinen hohen Dampfdruck, der zu Ablagerungen und Unebenheiten an der Glasunterseite führen könnte, und verhält sich gegenüber dem Glas inert. Allerdings kommt es zu einer geringfügigen diffusionsbedingten Absorption von Sn²⁺-Ionen in der zinnbadseitigen Oberfläche des Floatglases, was dann ein Problem darstellt, wenn eine besondere Oberflächenreinheit gefordert wird. Diese wird beispielsweise bei der Funktionalisierung von Glasoberflächen zur Herstellung von Glasverbünden, zur Glasverklebung oder zur Beschichtung gefordert.

Ein weiteres erhebliches Problem stellt die sogenannte Glaskorrosion dar, welche zwar sowohl auf der Zinnbadseite als auch auf der abgewandten Seite auftritt. Allerdings lässt sich eine Schutzbeschichtung zuverlässiger auf der abgewandten Seite aufbringen.

Bei der Glaskorrosion handelt es sich im Einzelnen um eine strukturelle Veränderung und damit verbundene Verwitterung der Glasoberfläche durch verschiedenartige chemische und physikalische Einflüsse, was sich bei fortschreitender Korrosion makroskopisch durch eine Trübung infolge einer dünnen Aufrauung und feinen Rissbildung in der Oberfläche bemerkbar macht. Mikroskopisch beginnt die Glaskorrosion mit dem Herauslösen von Oxiden diverser Elemente, z.B. Natrium, Kalium, Calcium, Barium oder Bor. An den betroffenen Stellen verändern sich damit die physikalischen Eigenschaften des Materials. Es bildet sich eine Gelschicht, die mit Ionen des einwirkenden Stoffes weiter zu einem schleierhaften Überzug reagiert, was ebenfalls die Transparenz der Oberfläche und damit den Qualitätseindruck merklich beeinträchtigt.

Die Glaskorrosion hat eine Reihe weiterer gravierender Nachteile. So können beim Handhaben der Glasscheiben im Lager durch Sauger Saugerabdrücke an der Gelschicht der Glasscheibenoberflächen entstehen. Ferner wird die Gelschicht bei der Lagerung der Glasscheiben durch Luftfeuchtigkeit und Kondensation von Wasser auf den Oberflächen des Glases derart verstärkt, dass sogar aneinanderliegende Scheiben in Scheibenstapeln miteinander verkleben können. Ein weiteres Problem der Glaskorrosion besteht darin, dass es zu Fehlern oder mangelhaften Qualitäten bei Beschichtungen oder Veredelungen auf der Gelschicht oder korrodierten Schicht kommen kann.

Die Zinnbadseite und die in der Floatglasproduktion vom Zinnbad abgewandte Seite weisen daher eine Reihe nennenswerter Unterschiede auf, die bei der Weiterverarbeitung der Gläser von erheblicher Bedeutung sein können. Es kommt daher entscheidend darauf an, zu jedem Zeitpunkt die Zinnbadseite des Glasproduktes zuverlässig bestimmen zu können.

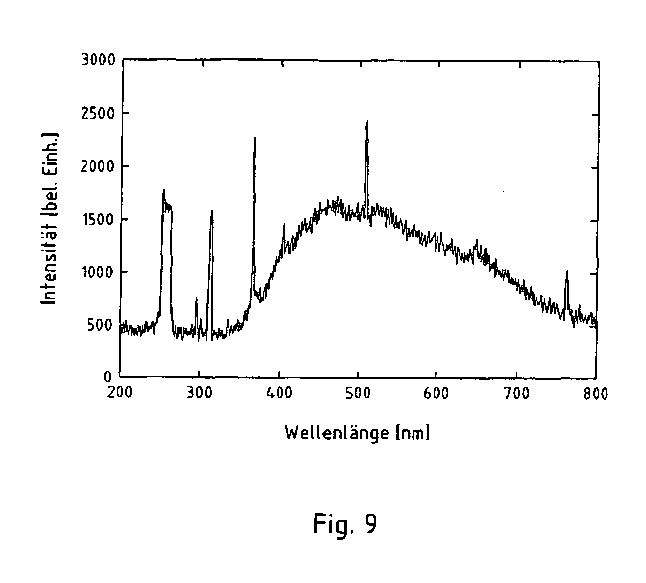

Wie beispielsweise in der EP 1 602 920 A1 angegeben, kann hierbei ausgenutzt werden, dass die auf der Zinnbadseite des Glases eindiffundierten Zinnatome durch Bestrahlung mit UV-Licht zur Fluoreszenz angeregt werden. Bei der Fluoreszenz werden die Atome jeweils durch Absorption eines Lichtquants, vorliegend eines UV-Lichtquants, in einen elektronisch angeregten Zustand überführt, was aufgrund der geringen Lebensdauer dieses Zustands (einige Nanosekunden) praktisch instantan einen Relaxationsprozess einleitet, der einerseits strahlungslos durch Umwandlung in Schwingungsenergie oder strahlend durch Aussendung eines Fluoreszenzphotons ablaufen kann. Entsprechend der Stokes'schen Regel ist das Fluoreszenzquant energieärmer und damit langwelliger, so dass es im Falle der Zinnatome zum sichtbaren Teil des elektromagnetischen Spektrums gehört. Ein typisches Fluoreszenzspektrum ist in Fig. 9 dargestellt. Deutlich erkennbar ist ein stark verbreiterter Fluoreszenz-Peak zwischen ca. 360 nm und ca. 750 nm mit einem Maximum bei ca. 500 nm, der von einigen charakteristischen Linien überlagert ist. Im Gesamteindruck ist makroskopisch ein milchigblaugraues Fluoreszenzleuchten erkennbar.

Aufgrund der geringen Absorptionslänge der UV-Strahlung im Glas werden nur die unmittelbar beleuchteten Zinnatome angeregt, was bedeutet, dass die Zinnbadseite eindeutig identifiziert werden kann, da das UV-Licht bei Bestrahlung der Atmosphärenseite an der Oberfläche absorbiert wird, so dass an der rückseitigen Fläche des Glasproduktes vorhandene Zinnatome nicht mehr angeregt werden und entsprechend keine Fluoreszenz detektiert werden kann. Somit ist eine Möglichkeit gegeben, mittels eines optischen Testverfahrens die Zinnbadseite des Floatglases von der bzw. den nicht mit dem Zinnbad in Kontakt gekommenen Seiten zu unterscheiden.

Aus der Praxis ist bekannt, zur Bestimmung der Zinnbadseite des Glasproduktes, dessen Oberfläche mit einer Quecksilber-Niederdruckdampflampe, wie sie beispielsweise aus Banknotenprüfgeräten bekannt ist, zu bestrahlen. Hierbei handelt es sich jedoch um ein äußerst grobes und ungenaues Messverfahren, da die Fluoreszenzintensität relativ zur Intensität der Hg-Lampe sehr gering ist und von dieser stark überlagert wird. Daher handelt es sich um eine nur schwer handhabbare Apparatur, welche zudem kein quantifizierbares Messergebnis der Fluoreszenz, sondern lediglich den Effekt der Fluoreszenz auf der Glasoberfläche sichtbar macht.

Ausgehend hiervon liegt der Erfindung die Aufgabe zugrunde, eine Vorrichtung der eingangs genannten Art anzugeben, die eine schnelle zuverlässige Bestimmung der Elementbelegung einer Oberfläche ermöglicht und dabei einfach bedienbar ist. Ferner soll sich die Vorrichtung durch vergleichsweise geringe Anschaffungs- und Betriebskosten auszeichnen und eine lange Lebensdauer der eingesetzten Komponenten aufweisen.

Die Aufgabe wird mit einer Vorrichtung nach dem Oberbegriff des Patentanspruches 1 durch die Merkmale des kennzeichnenden Teils des Patentanspruchs 1 gelöst. Insbesondere ist hierbei die Strahlführung durch Ausrichtung der UV-Strahlquelle und der Detektoreinheit relativ zur Oberfläche und/oder durch Einsatz eines wellenlängenselektiven Strahlteilers im Strahlengang derart gestaltet, dass die von der Oberfläche rückreflektierte UV-Strahlung von der Detektoreinheit ferngehalten wird.

Die erfindungsgemäße Vorrichtung lässt sich zur Bestimmung sämtlicher Elemente auf einer Glasoberfläche einsetzen, welche im UV-Bereich des elektromagnetischen Spektrums anregbar sind und die Anregungsenergie strahlend mittels Fluoreszenz abgeben. Entsprechend ergibt sich ein weites Spektrum möglicher Anwendungen in der Materialprüfung. Insbesondere eignet sie sich zur Bestimmung der Zinnkontamination auf Floatglas.

Der besondere Vorteil der erfindungsgemäßen Vorrichtung besteht darin, dass sie aufgrund der im Vergleich zu herkömmlichen Hg-Dampflampen kompakten Abmessungen einer UV-LED und aufgrund der einer LED innewohnenden Robustheit und Langlebigkeit problemlos als mobiles Handmessgerät ebenso wie als stationäres Messgerät in einer Produktionslinie ausgelegt werden kann. Der vergleichsweise geringe Stromverbrauch einer LED verbunden mit einer weit weniger aufwändigen Ansteuerelektronik - Vorschaltgeräte und Starter sind nicht erforderlich - qualifizieren eine UV-LED zusätzlich für den Einbau in ein kompaktes, autarkes und einfach bedienbares Handgerät. Durch Verwendung einer Detektionseinheit kann die Fluoreszenz auf der Oberfläche zuverlässig festgestellt und in Abhängigkeit von einer ggf. nachgeschalteten Auswerteelektronik rein qualitativ oder auch quantitativ angezeigt werden. Um die Quantenausbeute bei der Fluoreszenz insbesondere von Zinn zu maximieren, kommt bevorzugt eine im UV-C-Bereich des elektromagnetischen Spektrums (100 nm - 280 nm, entspr. 12,4 - 4,43 eV) emittierende Leuchtdiode zum Einsatz, wobei das Emissionsmaximum bevorzugt bei 280 nm liegt.

Durch die Ausrichtung von Strahlquelle und Detektoreinheit relativ zur zu untersuchenden Oberfläche kann in einer Konfiguration, bei der die Strahlquelle und die Detektoreinheit auf derselben Seite der Oberfläche angeordnet sind, wobei sie problemlos und platzsparend in einem gemeinsamen Gehäuse angeordnet werden können, auf einfach zu realisierende Weise erreicht werden, dass keine Störung des Messergebnisses für die Fluoreszenzstrahlung durch Beaufschlagung der Detektoreinheit mit der von der Oberfläche rückreflektierten W-Strahlung erfolgt. Insbesondere ist es hier nicht notwendig, durch Einsatz entsprechender optischer Elemente, wie UV-Filter o.ä., im Strahlengang eine Absorption der rückreflektierten UV-Strahlung zu bewirken, um sie von der von der Detektoreinheit fernzuhalten.

Bevorzugt wird diese relative Ausrichtung von UV-Strahlquelle und Detektoreinheit einfach dadurch erreicht, dass die Detektoreinheit außerhalb des reflektierten Strahls angeordnet ist. Handelt es sich bei der zu untersuchenden Oberfläche beispielsweise um eine Floatglasoberfläche, so wird infolge der sehr glatten Glasoberfläche das aufgestrahlte UV-Licht unter definiertem Reflexionswinkel rückreflektiert, so dass eine Ausrichtung der Detektoreinheit außerhalb des reflektierten Strahls problemlos möglich ist.

Nach einer weiteren vorteilhaften Ausgestaltung der Erfindung ist hierzu vorgesehen, dass die wenigstens eine UV-Leuchtdiode die Oberfläche unter einem Einfallswinkel α > 0 bestrahlt und die Detektoreinheit im Wesentlichen lotrecht zur Oberfläche ausgerichtet ist. Hierbei wird in vorteilhafter Weise berücksichtigt, dass die Intensität der Fluoreszenzstrahlung in der Regel in bezogen auf die Oberfläche lotrechter Richtung ein Intensitätsmaximum aufweist, so dass in der Detektoreinheit ein Signal vergleichsweise hoher Intensität gemessen werden kann.

Neben der vorstehend genannten Konfiguration ist es alternativ möglich, dass die wenigstens eine UV-Leuchtdiode die Oberfläche unter einem verschwindenden Einfallswinkel (α = 0) bestrahlt und die Detektoreinheit derart ausgerichtet ist, dass sie nur die winklig zur Oberfläche emittierte Fluoreszenzstrahlung detektiert. Hierbei wird die UV-Strahlung der UV-Leuchtdiode in diese wieder rückreflektiert und kann somit nicht auf die Detektoreinheit fallen, die ihrerseits entsprechend nur die fluoreszierende Strahlung misst. Ist das von der UV-Leuchtdiode emittierte Licht divergent, so versteht es sich, dass die Detektoreinheit derart ausgerichtet wird, dass sie außerhalb des Lichtkegels angeordnet ist.

Beiden vorstehend beschriebenen Varianten ist der Vorteil gemein, dass sie aufgrund ihres einfachen Aufbaus besonders für Handmessgeräte geeignet sind. Der vergleichsweise starken Abstandssensitivität dieser Konfigurationen kann dadurch begegnet werden, dass die Messanordnung in ein Gehäuse integriert wird, das auf der zu untersuchenden Oberfläche platziert wird, so dass der Abstand Oberfläche-Detektoreinheit stets definiert ist.

Alternativ oder zusätzlich umfasst die Strahlführung der erfindungsgemäßen Vorrichtung einen wellenlängenselektiven Strahlteiler im Strahlengang des Messaufbaus. Dieser kann beispielsweise mit einer wellenlängenselektiven Oberflächenbeschichtung versehen sein, welche die UV-Strahlung der Strahlquelle weitgehend reflektiert, während das Fluoreszenzlicht weitgehend transmittiert wird. Ebenso kann die Beschichtung derart ausgelegt sein, dass die UV-Strahlung der Strahlquelle transmittiert wird, während das Fluoreszenzlicht reflektiert wird.

Im Falle einer die UV-Strahlung reflektierenden Beschichtung, kann die Strahlführung der Vorrichtung beispielsweise derart gestaltet sein, dass die von der wenigstens einen UV-Leuchtdiode emittierte UV-Strahlung auf die zu untersuchende Oberfläche reflektiert, d.h. abgelenkt wird und die Fluoreszenzstrahlung durch den für diese Strahlung durchlässigen Strahlteiler hindurch auf die Detektoreinheit geleitet wird. Sind Strahlquelle und Strahlteiler derart ausgerichtet, dass die durch den Strahlteiler auf die Oberfläche abgelenkte UV-Strahlung unter nichtverschwindendem Einfallswinkel, d.h. schräg, auf die Oberfläche trifft, so fällt die rückreflektierte UV-Strahlung - bei geeignet gewähltem Winkel - überhaupt nicht mehr auf den Strahlteiler und somit auf die Detektoreinheit.

Wichtig für eine einfache Handhabbarkeit der Vorrichtung ist es, dem Bediener der Vorrichtung eine möglichst große Freiheit bei der Wahl des Messabstands zu erlauben. Dies wird bevorzugt dadurch erreicht, dass die Strahlquelle wenigstens ein erstes strahlformendes Element aufweist, wobei das strahlformende Element den Strahl kollimiert. Hierbei wird ein annähernd paralleles Strahlenbündel erzeugt, welches auf der zu untersuchenden Oberfläche unabhängig vom jeweils gewählten Abstand eine gleichmäßige Anregungsintensität ermöglicht. Zur adäquaten Strahlformung können Blenden und/oder Kollimatorlinsen verwendet werden.

Die Detektoreinheit ihrerseits umfasst bevorzugt ein Detektorelement zur Umsetzung der Strahlung in ein elektrisches Signal. Das Detektorelement kann beispielsweise als Fotodiode ausgebildet sein, deren Sperrstrom in Abhängigkeit von der auftreffenden Fluoreszenzstrahlung variiert. Zur Maximierung der messbaren Fluoreszenzintensität und damit zur Maximierung des Signal-Rausch-Abstandes im Messsignal ist die Detektoreinheit ferner bevorzugt mit einem strahlformenden Element zur Fokussierung der Fluoreszenzstrahlung auf das Detektorelement versehen. Dieses strahlformende Element ist zweckmäßigerweise als wenigstens eine Fokussierlinse ausgebildet. Weiterhin sollte möglichst viel Störlicht von dem Detektorelement ferngehalten werden, was durch Einsatz entsprechender Filter zur Abschwächung nicht interessierender Spektralbereiche (beispielsweise des nahen Infrarots) möglich ist. Ein weiterer Vorteil des Einsatzes einer Fokussieroptik besteht darin, dass die Abstandssensitivität des Messsignals stark reduziert wird.

Erfindungsgemäß umfasst die Vorrichtung Mittel zur Online-Überwachung der UV-Strahlintensität der wenigstens einen UV-Leuchtdiode. Hierdurch wird sichergestellt, dass Schwankungen in der Intensität der Fluoreszenzstrahlung, die auf eine Schwankung der anregenden UV-Strahlleistung zurückführbar sind, auch als solche erkannt werden. In diesem Fall wird nämlich Fluoreszenzintensität einfach das Schwankungsmuster der eingestrahlten UV-Intensität nachbilden und sich so messelektronisch kompensieren lassen.

Die Mittel zur Online-Überwachung umfassen eine zweite fluoreszierende Oberfläche und zweite Detektoreinheit, wobei die zweite Detektoreinheit die von der zweiten Oberfläche emittierte Fluoreszenzstrahlung detektiert. Bei dieser Konfiguration wird ein kleiner Teil der von der wenigstens einen UV-Leuchtdiode ausgestrahlten Intensität ausgekoppelt und auf die zweite fluoreszierende Oberfläche geleitet. Die ausgekoppelte Strahlintensität bewirkt auf der zweiten Oberfläche wiederum die Emission von Fluoreszenzstrahlung, die dann von der zweiten Detektoreinheit registriert wird. Hierbei kann entsprechend eine zur ersten Detektoreinheit baugleiche zweite Detektoreinheit verbunden mit der gleichen, daran gekoppelten Verstärkerelektronik eingesetzt werden. Hierdurch werden auch beispielsweise Schwankungen der elektronischen Verstärkung z. B. in Abhängigkeit der Temperatur kompensiert.

Wird im Strahlengang der Vorrichtung ein wellenlängenselektiver Strahlteiler eingesetzt, so kann dieser derart ausgebildet sein, dass er den großen Anteil (» 50 %) der Leistung der UV-Strahlung an seiner Oberfläche reflektiert, jedoch einen kleinen Anteil transmittiert. Dieser kann dann in vorteilhafter Weise zur Überwachung der Strahlleistung verwendet werden, ohne dass die UV-Strahlleistung insgesamt signifikant geschwächt ist.

Die Mittel zur Online-Überwachung der UV-Strahlleistung umfassen eine im Strahlengang der UV-Strahlung angeordnete fluoreszierende Oberfläche . Diese Oberfläche sollte relativ zum Strahlquerschnitt des von der wenigstens einen UV-Leuchtdiode emittierten Strahls klein ausgebildet sein, um die damit verbundene Schwächung der Strahlleistung zu minimieren. Beispielsweise sollte die fluoreszierende Oberfläche nicht mehr als 10% des Strahlquerschnitts betragen. Der besondere Vorteil einer derartigen Leistungsauskopplung zur Online-Überwachung der Strahlleistung besteht u.a. darin, dass im Gegensatz zum Einsatz eines Strahlteilers praktisch kein zusätzlicher Raumbedarf besteht, so dass eine solche Vorrichtung sehr kompakt ausgelegt werden kann.

Die Oberfläche selbst kann verschiedenste Formen annehmen. Besonders bevorzugt ist sie als im Strahlengang der UV-Strahlung angeordneter Faden ausgebildet, der aus einem Material mit den gewünschten optischen Eigenschaften besteht. Als geeignetes fluoreszierendes Material kann beispielsweise eine mit fluoreszierender Farbe bestrichene Polyamid- bzw. Polyesterfaser oder ein Polyneon®-Material verwendet werden. Der Durchmesser der Faser liegt bevorzugt bei 0,11 mm. Auch andere Oberflächengeometrien sind hier möglich. Ein entscheidendes Auswahlkriterium ist hierbei, dass die Strahleigenschaften der UV-Leuchtdiode, insbesondere ihre Strahldivergenz, durch die im Strahlengang befindliche Oberfläche nicht signifikant beeinflusst wird, um eine definierte bestrahlte Fläche auf der zu untersuchenden Oberfläche beizubehalten.

Ferner kommt es bei der Messung der Fluoreszenzintensität darauf an, aussagekräftige und reproduzierbare Ergebnisse unabhängig von den Beleuchtungsverhältnissen der Umgebung zu erhalten. Auch eine Messung in Anwesenheit von UV-Strahlung, beispielsweise bei Sonneneinstrahlung, darf die Messergebnisse nicht verfälschen. Nach einer weiteren vorteilhaften Ausgestaltung der Erfindung ist daher vorgesehen, dass die Strahlquelle Modulationsmittel zur Modulierung der durch die Leuchtdiode emittierten UV-Strahlung umfasst. Hierdurch ist es möglich, der Messstrahlung und damit auch der Fluoreszenzstrahlung ein unverwechselbares Muster gleichsam aufzuprägen, wodurch eine Unterscheidbarkeit gegenüber UV- und sichtbarem Licht der Umgebung durch entsprechende der Detektoreinheit nachgeschaltete Auswertemittel möglich wird.

Um den Intensitätswert des auf das Detektorelement fallenden Fluoreszenzlichtes in ein geeignetes Signal umzuwandeln, ist nach einer weitergehenden Lehre der Erfindung vorgesehen, dass die Vorrichtung elektronische Auswertemittel zur Erzeugung eines die Fluoreszenzintensität charakterisierenden elektrischen Signalwertes umfasst. Beispielsweise kann es sinnvoll sein, den Intensitätswert des Fluoreszenzwertes in einen proportionalen Gleichspannungswert umzuwandeln, welcher in den elektronischen Auswertemitteln nachgeschalteten Anzeigemitteln zweckmäßigerweise als Zahlwert auf einer Segment- oder Matrixanzeige dargestellt wird. Wird im Falle der Produktion und Weiterverarbeitung von Glasprodukten, insbesondere Floatglas, die erfindungsgemäße Vorrichtung inline in einer nachgeschalteten Produktionsanlage eingesetzt, so kann der Messwert auch in dieser Produktionsanlage unmittelbar verarbeitet werden, um die gewünschte Glasseite einer Bearbeitung (z.B. Verklebung, Beschichtung, Verbundherstellung usw.) zuzuführen. Ebenfalls ist es möglich, bei einer bereits einer weiteren Bearbeitung zugeführten Glasseite festzustellen, ob diese Bearbeitung auf der gewünschten Seite erfolgt ist. Auch bei der Herstellung und Bearbeitung von technischen Bauteiloberflächen allgemein kann die Vorrichtung in eine Produktionsanlage integriert und die Fluoreszenzwerte als Maß für die Elementbelegung der Oberfläche eingesetzt werden, um beispielsweise eine gleichbleibende Oberflächenreinheit und damit Produktqualität sicherzustellen. Ebenso ist es möglich, die detektierte Fluoreszenz und damit die Identifikation der elementbelegten - oder bei nicht detektierter Fluoreszenz die Identifikation der nicht belegten Seite - durch eine entsprechende farbige Anzeige-LED darzustellen.

Wie Untersuchungen der Anmelderin gezeigt haben, wird die Intensität der Fluoreszenz auch durch die Materialzusammensetzung der zu untersuchenden Oberfläche, im Falle eines zu untersuchenden Glasproduktes durch die Materialzusammensetzung und in gewissen Grenzen durch den Glasherstellprozess, beeinflusst. Um derartige Einflüsse, die in Einzelfällen eine eindeutige Aussage über die Orientierung des Glasproduktes bei der Messung unmöglich machen können, zu minimieren, ist nach einer weiteren vorteilhaften Ausgestaltung der Erfindung vorgesehen, dass in den elektronischen Auswertemitteln in Abhängigkeit von der physikalischen und/oder chemischen Beschaffenheit der zu untersuchenden Oberfläche ein erster Schwellwert einstellbar ist, unterhalb dessen der elektrische Signalwert eine nicht belegte Oberfläche repräsentiert. Bevorzugt sind die Auswertemittel dabei derart ausgebildet, dass sie unmittelbar vor der Messung eine einfache Eingabe eines beispielsweise auf Erfahrungswerten des Bedieners basierenden Schwellwertes erlauben. In analoger Weise kann vorgesehen sein, dass in den elektronischen Auswertemitteln in Abhängigkeit von der physikalischen und/oder chemischen Beschaffenheit der zu untersuchenden Oberfläche ein zweiter Schwellwert einstellbar ist, oberhalb dessen der elektrische Signalwert eine elementbelegte Oberfläche repräsentiert.

In einer anderen Betriebsweise des Messgeräts wird eine vergleichende Messung beider Oberflächen, insbesondere beider Glasoberflächen, entweder durch zwei Sensoren oder zeitlich aufeinander folgende Messungen durchgeführt.

Im Falle einer Modulation des von der erfindungsgemäß eingesetzten UV-LED ausgestrahlten Anregungslichtes ist nach einer weiteren vorteilhaften Ausgestaltung der Erfindung vorgesehen, dass die elektronischen Auswertemittel wenigstens ein Filter zur Abschwächung der Frequenzen oberhalb und unterhalb der Modulationsfrequenz der UV-Strahlung umfassen. Durch Einsatz derartiger Filter, beispielsweise in Form eines Hochpassfilters und eines Tiefpassfilters und/oder eines Bandpassfilters ist es problemlos möglich, Störeinflüsse anderer Frequenzen, insbesondere von Oberschwingungen des zu analysierenden Signals derart abzuschwächen, dass sie das Messergebnis nicht mehr nennenswert beeinflussen.

Ein besonderer Vorteil der erfindungsgemäßen Vorrichtung besteht weiterhin darin, dass eine extrem schnelle Erkennung von fluoreszierenden Bereichen auf Oberflächen möglich ist. Hierzu werden bei geeigneter Auslegung der Elektronik lediglich wenige 1/100 Sekunden benötigt.

Im Folgenden wird die Erfindung anhand einer ein Ausführungsbeispiel darstellenden Zeichnung näher erläutert. Es zeigen:
- Fig. 1: eine vergleischsweise ausgegebene Vorrichtung zur Bestimmung der Zinnkontamination auf einer Oberfläche eines Glasproduktes in einer ersten Konfiguration in schematischer Seitenansicht,
- Fig. 2: die vergleischsweise ausgegebene Vorrichtung zur Bestimmung der Zinnkontamination auf einer Oberfläche in einer zweiten Konfiguration in schematischer Seitenansicht,
- Fig. 3: die vergleischsweise ausgegebene Vorrichtung zur Bestimmung der Zinnkontamination auf einer Oberfläche in einer dritten Konfiguration in schematischer Seitenansicht,
- Fig. 4: eine erfindungsgemäße Vorrichtung zur Bestimmung der Zinnkontamination auf einer Oberfläche in einer ersten Konfiguration in schematischer Seitenansicht mit Mitteln zur Online-Überwachung der UV-Strahlleistung,
- Fig. 5: die erfindungsgemäße Vorrichtung zur Bestimmung der Zinnkontamination auf einer Oberfläche in einer zweilen Konfiguration in schematischer Seitenansicht mit einem Strahlteiler und Mitteln zur Online-Überwachung der UV-Strahlleistung,
- Fig. 6: die Vorrichtung der Fig. 3 mit einer elektronischen Ansteuer- und Auswerteeinheit,
- Fig. 7: eine vergleichsweise ausgegebene vorrichtung zur Bestimmung der Zinnkontamination auf einer Oberfläche in einer alternativen Konfiguration,
- Fig. 8: ein Blockschaltbild der der Detektoreinheit nachgeschalteten Auswerteelektronik und
- Fig. 9: ein typisches Fluoreszenzspektrum der Zinnbadseite von Floatglas.

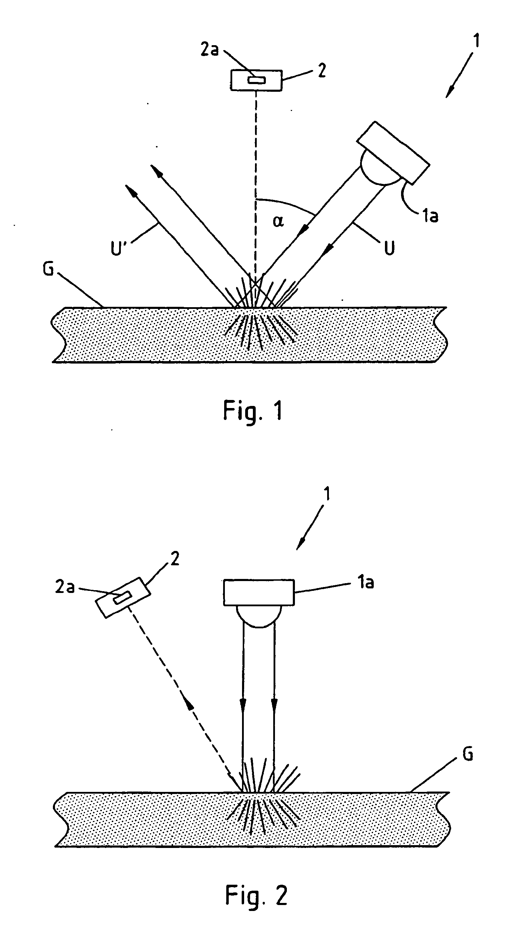

In Fig. 1 ist vergleichsweise Vorrichtung zur Bestimmung der Elementbelegung auf einer Oberfläche mittels Fluoreszenz dargestellt. Speziell handelt es sich um eine Vorrichtung zur Bestimmung der Zinnkontamination auf einer Oberfläche G eines Glasproduktes, vorliegend auf einer Floatglasscheibe. Die Vorrichtung umfasst eine Strahlquelle 1 zur Erzeugung von die Zinnatome auf der Glasoberfläche G zur Fluoreszenz anregender UV - Strahlung. Die strahlquelle 1 umfasst als strahlerzeugendes Element eine UV-Strahlung U emittierende Leuchtdiode la (LED). Bevorzugt handelt es sich um eine solche, die im UV C-Bereich, bevorzugt bei ca. 280 nm, emittiert, um die Quantenausbeute bei der Zinn-Fluoreszenz zu maximieren.

Die Vorrichtung umfasst weiterhin eine Detektoreinheit 2 zur Detektion der von den auf der Glasoberfläche G vorhandenen Zinnatomen isotrop emittierten Fluoreszenzstrahlung F. Die Detektoreinheit 2 ihrerseits weist ein Detektorelement, vorliegend ein Fotodiode 2a, auf, in welcher die auftreffende Strahlleitung in einen proportionalen Strom umgewandelt wird. Wie in Fig. 1 erkennbar, sind die Strahlquelle 1 und die Detektoreinheit 2 relativ zueinander und zur Glasoberfläche G derart ausgerichtet, dass das eingestrahlte UV-Licht U unter einem Winkel α > 0 auf die Glasoberfläche G fällt und an der Oberfläche G unter demselben Winkel reflektiert wird. Der Detektor steht hingegen im Wesentlichen lotrecht zur Glasoberfläche, so dass das Detektorelement 2a nicht mit reflektierter UV-Strahlung U', sondern ausschließlich mit Fluoreszenzstrahlung F beaufschlagt wird. Hierbei wird in vorteilhafter Weise berücksichtigt, dass die Intensität der Fluoreszenzstrahlung in der Regel in bezogen auf die Oberfläche lotrechter Richtung ein Intensitätsmaximum aufweist, so dass in der Detektoreinheit ein Signal mit vergleichsweise hoher Intensität gemessen werden kann. Nicht dargestellt in Fig. 1 - wie auch in allen weiteren Figuren - ist ein Schutzglas aus Quarzglas, welches die Detektoreinheit von verunreinigungen schützt.

In Fig. 2 ist eine weitere vergleichende Vorrichtung zur Bestimmung der zinnkontamination auf einer Oberfläche in einer zu der Vorrichtung aus Fig. 1 alternativen Konfiguration dargestellt. Im Unterschied zur Vorrichtung der Fig. 1 ist hier die Strahlquelle 1 mit der UV-Leuchtdiode la lotrecht zur die Oberfläche ausgerichtet, so dass sie diese unter einem verschwindenden Einfallswinkel (α = 0) bestrahlt. Die Detektoreinheit 2 ist dabei derart ausgerichtet, dass das Detektorelement 2a sie nur die winklig zur Oberfläche emittierte Fluoreszenzstrahlung detektiert, wie Fig. 2 gezeigt. Bei dieser Konstellation wird die UV-Strahlung der UV-Leuchtdiode la somit in diese rückreflektiert und kann nicht auf das Detektorelement 2a fallen.

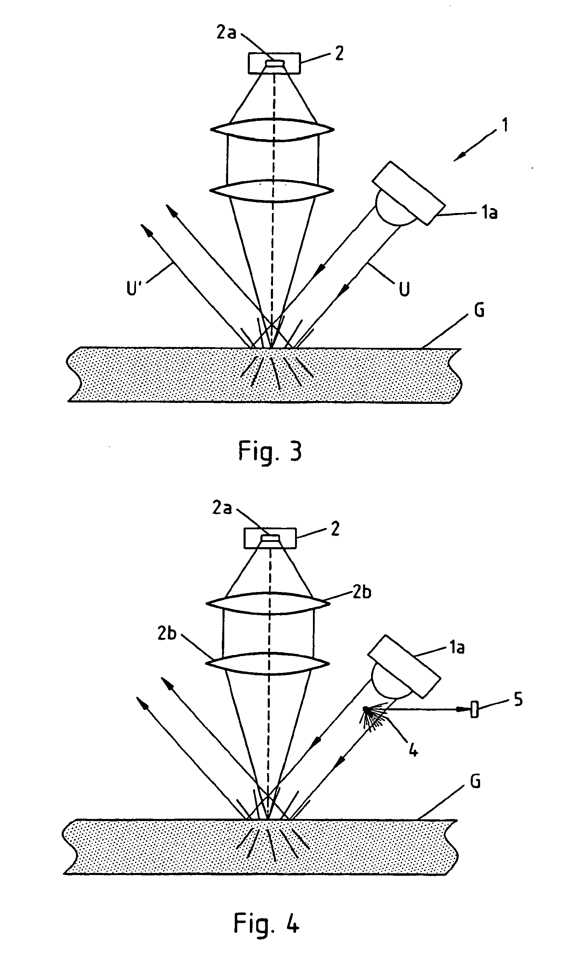

In Fig. 3 ist eine weitere vergleichende vorrichtung zur Bestimmung der zinnkontamination auf einer Oberfläche dargestellt. Diese entspricht im Wesentlichen der der Fig. 1, wobei die Vorrichtung vorliegend zwei bikonvexe Fokussierlinsen zur Fokussierung des Fluoreszenzsignals auf das Detektorelement 2a umfasst. Die Verwendung einer Fokussieroptik hat den Vorteil, dass die Abstandssensitivität der vorstehend im Zusammenhang mit Fig. 1 und 2 beschriebenen Vorrichtungen stark reduziert wird. Untersuchungen der Anmelderin haben gezeigt, dass durch Einsatz einer Fokussieroptik die Abstandssensitivität des Fluoreszenzsignals auf dem Detektorelement um den Faktor 5 verringert werden kann. Schließlich kann bei Einsatz einer Fokussieroptik mit deutlich vergrößertem Objektabstand (Abstand zwischen der zu untersuchenden Oberfläche und der ihr zugewandten Fokussierlinse) gearbeitet werden.

Die in Fig. 4 dargestellte erfindungsgemäße vorrichtung unterscheidet sich von der aus Fig. 3 darin, dass Mittel zur Online-Überwachung der UV-Strahlleistung vorgesehen sind. Diese sind bei der Vorrichtung der Fig. 4 als eine im Strahlengang der UV-LED la angeordnete fluoreszierende Oberfläche 4 ausgebildet. vorliegend handelt es sich um eine mit fluoreszierender Farbe bestrichene Polyamid- bzw. Polyesterfaser oder ein Polyneon®-Material 4, deren bzw. dessen Oberfläche bei Bestrahlung mit UV-Licht fluoresziert. Dieses zusätzliche Fluoreszenzsignal kann mittels einer weiteren Detektoreinheit 5 aufgenommen werden. Das in dieser Detektoreinheit 5 erzeugte elektrische Signal kann einer gemeinsamen Auswerteelektronik (nicht dargestellt in Fig. 4) mit dem Detektorsignal der ersten Detektoreinheit 2 verarbeitet werden, so dass Schwankungen in der Intensität der Fluoreszenzstrahlung, die eindeutig auf eine Schwankung der anregenden UV-Strahlleistung zurückführbar sind auch als solche erkannt werden und kompensiert werden können.

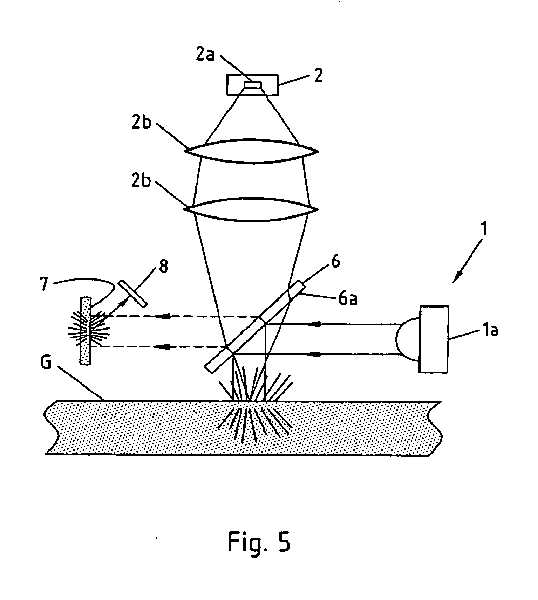

In Fig. 5 ist eine weitere erfindungsgemäße vorrichtung zur Bestimmung der Zinnkontamination auf einer Oberfläche gezeigt. Diese Vorrichtung umfasst einen Quarzglas-Strahlteiler 6, welcher mit einer wellenlängenselektiven Beschichtung 6a versehen ist. Diese ist derart beschaffen, dass die auftreffende UV-Strahlung zum großen Teil (> 80 %) in Richtung der Oberfläche G reflektiert wird, während ein geringer Teil (< 20 %) hindurch transmittiert wird. Dieser Anteil trifft auf eine fluoreszierende Oberfläche 7, wobei das hier erzeugte Fluoreszenzlicht durch eine weitere Detektoreinheit 8 aufgenommen wird. Hierdurch ist wiederum eine Online-Leistungsüberwachung realisiert. Ferner sind die Detektoreinheit 2 und die Detektoreinheit 8 mit einer gemeinsamen Auswerteelektronik (nicht dargestellt) verbunden, so dass Leistungsschwankungen der Strahlquelle 1 kompensiert werden können.

Die reflektierte UV-Strahlung trifft auf die Oberfläche G und induziert dort in der bereits erläuterten Weise Fluoreszenzstrahlung. Für das Fluoreszenzlicht ist der Strahlteiler 6 jedoch weitgehend transparent, so dass die Fluoreszenzintensität ohne nennenswerte Abschwächung den Strahlteiler 6 passiert und über die im Zusammenhang mit Fig. 3 bereits beschriebene Fokussieroptik auf das Detektorelement 2a fokussiert wird. Die von der Oberfläche G rückreflektierte UV-Strahlung passiert nur stark abgeschwächt den Strahlteiler und wird in den Fokussierlinsen 2b vollständig absorbiert, so dass keine Beeinflussung des Fluoreszenzsignals im Detektorelement 2a stattfindet.

Wird die Winkelstellung des Strahlteiler 6 variiert (nicht dargestellt), so kann erreicht werden, dass die rückreflektierte UV-Strahlung nicht mehr auf den Strahlteiler trifft. In diesem Falle kann auch auf die UV-absorbierende Fokussieroptik 2b verzichtet werden.

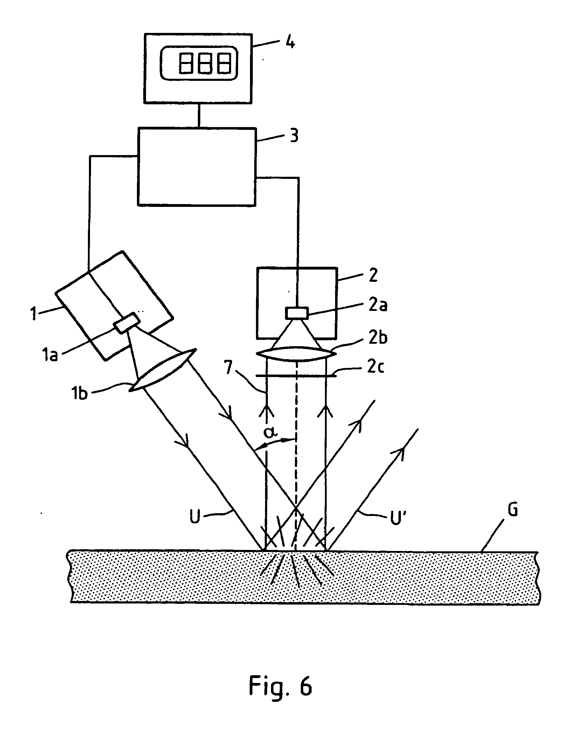

Die in Fig. 6 dargestellte Vorrichtung gleicht im Wesentlichen der Fig. 3. In diesem Ausführungsbeispiel wird die von der UV-LED la emittierte anregende UV-Strahlung unter einem Winkel α > 0 auf die Oberfläche G gestrahlt, wobei die induzierte Fluoreszenzstrahlung durch eine lotrecht zur Glasoberfläche G angeordneten Detektoreinheit 2 detektiert wird. Aufgrund dieser relativen Ausrichtung von Strahlquelle 1 und Detektoreinheit 2 wird eine Beaufschlagung des Detektorelements 2a mit rückreflektierter UV-Strahlung sicher vermieden. Zur Kollimierung der emittierten UV-Strahlung umfasst die Strahlquelle 1 eine Kollimationslinse 1b, welche einen annähernd parallelen Strahlverlauf erzeugt, so dass auf der zu untersuchenden Glasoberfläche G unabhängig vom jeweils gewählten Abstand eine gleichmäßige Anregungsintensität vorliegt.

Die Detektoreinheit 2 weist wiederum eine Fotodiode 2a als Detektorelement auf, auf die die Fluoreszenzstrahlung F mittels einer Fokussierlinse 2b fokussiert wird. In Propagationsrichtung der Fluoreszenzstrahlung F vor der Fokussierlinse 2b ist ferner ein optisches Filter 2c zur Ausfilterung von Umgebungslicht angeordnet, um Störeinflüsse weiter zu minimieren.

Die Vorrichtung gemäß Fig. 6 umfasst ferner eine kombinierte Ansteuer- und Auswerteeinheit 3, welche die Ansteuerelektronik (nicht im Einzelnen dargestellt) für die UV-LED la enthält. Die Ansteuerelektronik umfasst einen Oszillator, welcher das ausgestrahlte Uv-Licht U mit einer Frequenz von vorliegend 1,5 kHz moduliert. Die Ansteuer- und Auswerteeinheit 3 enthält ferner eine Schaltung, welche das von der Fotodiode 2a in Abhängigkeit von der Intensität der eingestrahlten Fluoreszenzstrahlung F erzeugte Stromsignal in eine proportionale Gleichspannung umwandelt, welche ihrerseits auf Anzeigemitteln in Form einer Displayeinheit 4 als Zahlenwert ausgegeben wird. Alternativ oder ergänzend zur in Fig. 6 dargestellten Displayeinheit 4 können auch farbige Anzeige-LEDs vorgesehen sein, welche signalisieren, ob die Zinnbadseite (z.B. grüne LED leuchtet auf) oder die zinnbadabgewandte Seite (z.B. rote LED leuchtet auf) untersucht wurde. Auf der Ansteuer- und Auswerteeinheit 3 können ferner Eingabemittel vorgesehen sein (nicht dargestellt), mittels derer sich ein erster und ein zweiter Schwellwert einstellen lassen, um beispielsweise die Materialzusammensetzung der jeweils untersuchten Glassorte, die ihrerseits einen Einfluss auf die Intensität des Fluoreszenzsignals hat, zu berücksichtigen.

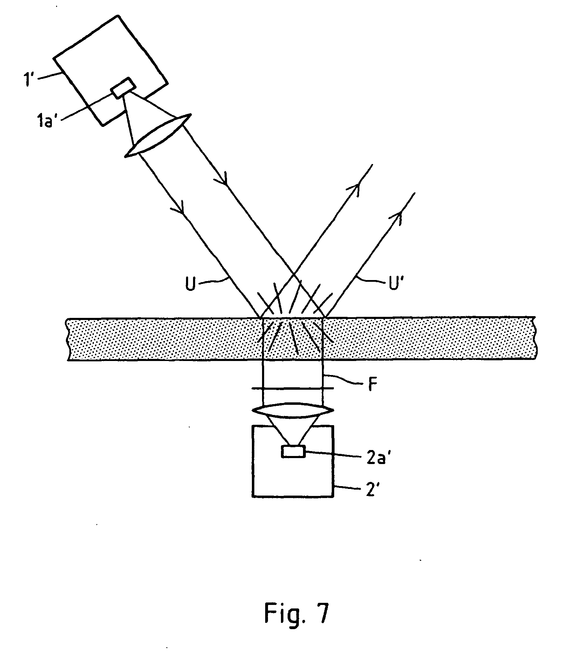

In Fig.7 ist eine hierzu alternative Konfiguration von Strahlquelle 1' und Detektoreinheit 2' dargestellt. Hierbei ist die Strahlquelle 1' unverändert oberhalb der zu untersuchenden Glasoberfläche G angeordnet und bestrahlt diese wiederum unter einem Einfallswinkel von ca. 35°. Die Detektoreinheit 2' ist hingegen unterhalb des Floatglases angeordnet und nimmt die an der der Strahlquelle 1' zugewandten Oberfläche erzeugte und durch den Glaskörper transmittierte Fluoreszenzstrahlung F' auf. Der Vorteil ist hierbei, dass keine störende Anregungsstrahlung U' auf das Detektorelement la' fallen kann, da diese im Glas vollständig absorbiert wird.

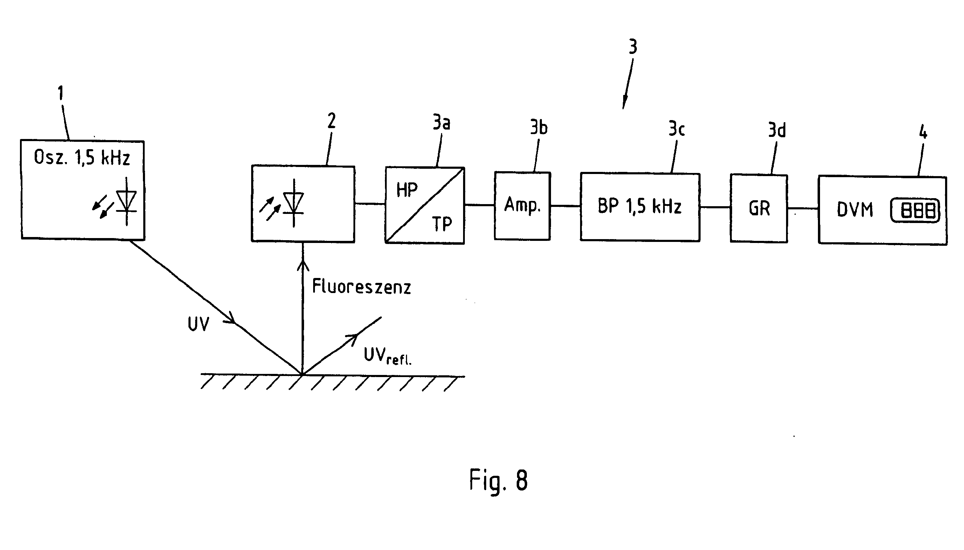

In Fig. 8 ist nun ein Blockschaltbild der der Detektoreinheit 2 nachgeschalteten Auswerteelektronik dargestellt. Die von der erfindungsgemäß verwendeten UV-LED erzeugte UV-Strahlung wird, wie bereits erwähnt, mittels eines Oszillators mit einer Frequenz von 1,5 kHz moduliert. Das auf der Glasoberfläche G erzeugte Fluoreszenzlicht wird von der in der Detektoreinheit 2 vorhandenen Fotodiode 2a als Detektorelement in ein Stromsignal umgewandelt, welches an die Auswerteeinheit 3 weitergegeben wird. Dort durchläuft es als an einem ohmschen Widerstand abgegriffenes Spannungssignal mehrere Hochpass- und Tiefpassfilter, welche summarisch durch Block 3a symbolisiert werden. Ferner wird das Signal in mehreren Verstärkerstufen, zusammengefasst in dem Block 3b, verstärkt. Weiter durchläuft das Signal einen Bandpassfilter 3c mit einer Mittenfrequenz von 1,5 kHz, also der Modulationsfrequenz des Anregungssignals U und des Fluoreszenzsignals F. Schließlich wird das 1,5kHz-Spannungssignal in einem Gleichrichter gleichgerichtet und an die Displayeinheit (DVM) ausgegeben.

Erfindungsgemäß wird wie im Zusammenhang mit Fig. 4 oder 5 beschrieben, eine Online-Leistungsüberwachung mittels Strahlteiler oder fluoreszierender Oberfläche im Strahlengang der UV-LED la eingesetzt. Dabei wird die auf der fluoreszierenden Oberfläche 4, 7 erzeugte Fluoreszenzstrahlung auf ein zweites Detektoreinheit 5, 8 geleitet und dort detektiert. Dieser Detektoreinheit 5, 8 kann dann eine zu der in Fig. 8 im Detail beschriebenen Auswerteeinheit 3 identische Auswerteeinheit (nicht dargestellt) nachgeschaltet sein, deren Ausgangssignal dann ebenfalls an das DVM ausgegeben werden kann.

Mit der erfindungsgemäßen Vorrichtung wird ein kompaktes und infolge des geringen Energieverbrauchs der erfindungsgemäß eingesetzten UV-LED autark betreibbares, robustes Messgerät geschaffen, welches zuverlässige und reproduzierbare Ergebnisse bei der Bestimmung der Elementbelegung auf einer Glas oberfläche ermöglicht. Als besonders vorteilhaft erweist sich die Verwendung zur Bestimmung der Zinnkontamination auf Floatglas.

## Patentansprüche

1. Vorrichtung zur Bestimmung der Elementbelegung auf einer Glasoberfläche (G), insbesondere zur Bestimmung der Zinnkontamination auf Floatglas,
- mit einer wenigstens eine UV-Strahlquelle (1), deren UV-Strahlung das Element zur Fluoreszenz anregt, und
- mit einer Detektoreinheit (2) zur Detektion der Fluoreszenzstrahlung,
**dadurch gekennzeichnet,**
- **dass** die Strahlführung durch Ausrichtung der UV-Strahlquelle (1) und der Detektoreinheit (2) relativ zur Glasoberfläche (G) und/oder durch Einsatz eines wellenlängenselektiven Strahlteilers (6) im Strahlengang derart gestaltet ist, dass die von der Glasoberfläche (G) rückreflektierte UV-Strahlung von der Detektoreinheit (2) ferngehalten wird,
- **dass** die wenigstens eine UV-Strahlquelle (1) eine UV-Leuchtdiode (1a) umfasst,
- **dass** die Vorrichtung Mittel (4, 5, 7, 8) zur Online-Überwachung der UV-Strahlleistung der wenigstens einen UV-Leuchtdiode umfasst und
- **dass** die Mittel (4, 5, 7, 8) zur Online-Überwachung der UV-Strahlleistung eine zweite fluoreszierende Oberfläche (4, 7) und zweite Detektoreinheit (5, 8) umfassen, wobei die zweite Detektoreinheit (5, 8) die von der zweiten Oberfläche (4, 7) emittierte Fluoreszenzstrahlung detektiert.

2. Vorrichtung nach Anspruch 1,
**dadurch gekennzeichnet, d**a**ss**
die UV-Strahlquelle (1) und die Detektoreinheit (2) relativ zur Glasoberfläche derart ausgerichtet sind, dass die Detektoreinheit (2) außerhalb des reflektierten Strahls (U') angeordnet ist.

3. Vorrichtung nach Anspruch 2,
**dadurch gekennzeichnet, dass** die wenigstens eine UV-Leuchtdiode (1a) die Oberfläche (G) unter einem Einfallswinkel α > 0 bestrahlt und die Detektoreinheit (2) im Wesentlichen lotrecht zur Glasoberfläche (G) ausgerichtet ist.

4. Vorrichtung nach Anspruch 2,
**dadurch gekennzeichnet, dass** die wenigstens eine UV-Leuchtdiode (1a) die Glasoberfläche (G) unter einem verschwindenden Einfallswinkel (α = 0) bestrahlt und die Detektoreinheit derart ausgerichtet ist, dass sie winklig zur Glasoberfläche emittierte Fluoreszenzstrahlung detektiert.

5. Vorrichtung nach einem der Ansprüche 1 bis 4,
**dadurch gekennzeichnet, dass** die Leuchtdiode im (1a) UV C-Bereich, bevorzugt bei ca. 280 nm oder darunter, emittiert.

6. Vorrichtung nach einem der Ansprüche 1 bis 5,
**dadurch gekennzeichnet, dass** die Strahlquelle (1) wenigstens ein erstes strahlformendes Element (1b), insbesondere eine Blende und/oder Kollimatorlinse (1b), aufweist, wobei das strahlformende Element (1b) den Strahl (U) kollimiert.

7. Vorrichtung nach einem der Ansprüche 1 bis 6,
**dadurch gekennzeichnet, dass** die Detektoreinheit (2) ein Detektorelement, bevorzugt eine Fotodiode (2a), zur Umsetzung der Strahlung (F) in ein elektrisches Signal umfasst und wenigstens ein zweites strahlformendes Element (2b), insbesondere eine Fokussierlinse (2b), zur Fokussierung der Fluoreszenzstrahlung (F) auf das Detektorelement (2a) und/oder ein Filterelement (2c) zur Ausfilterung von Störlicht umfasst.

8. Vorrichtung nach einem der Ansprüche 1 bis 7,
**dadurch gekennzeichnet, dass** der wellenlängenselektive Strahlteiler (6) die UV-Strahlung auf die Glasoberfläche (G) reflektiert und einen geringen Anteil der Strahlintensität zu den Mitteln zur Online-Überwachung der UV-Strahlleistung transmittiert.

9. Vorrichtung nach einem der Ansprüche 1 bis 8,
**dadurch gekennzeichnet, dass** die Strahlquelle (1) Modulationsmittel zur Modulierung der durch die Leuchtdiode (1a) emittierten UV-Strahlung umfasst.

10. Vorrichtung nach einem der Ansprüche 1 bis 9,
**dadurch gekennzeichnet, dass** die Vorrichtung elektronische Auswertemittel (3) zur Erzeugung eines die Fluoreszenzintensität charakterisierenden elektrischen Signalwertes umfasst.

11. Vorrichtung nach Anspruch 10,
**dadurch gekennzeichnet, dass** in den elektronischen Auswertemitteln (3) in Abhängigkeit von der Beschaffenheit der zu untersuchenden Glasoberfläche ein erster Schwellwert einstellbar ist, unterhalb dessen der elektrische Signalwert eine nicht elementbelegte Glasoberfläche repräsentiert.

12. Vorrichtung nach Anspruch 10 oder 11,
**dadurch gekennzeichnet, dass** in den elektronischen Auswertemitte (3) in Abhängigkeit von der Beschaffenheit der zu untersuchenden Glasoberfläche ein zweiter Schwellwert einstellbar ist, oberhalb dessen der elektrische Signalwert eine elementbelegte Glasoberfläche repräsentiert.

13. Verwendung einer Vorrichtung nach einem der Ansprüche 1 bis 12 zur Bestimmung der Zinnseite bei einem im Float-Prozess hergestellten Floatglasprodukt.

## Claims

1. Apparatus for determining the element occupancy on a glass surface (G), in particular for determining the tin contamination on float glass,
- including at least one UV beam source (1) whose UV radiation excites the element to fluorescence and
- including a detector unit (2) for the detection of fluorescence radiation,
c h a r a c t e r i s e d i n t h a t
- the beam guidance is configured by alignment of the UV beam source (1) and the detector unit (2) relative to the glass surface (G) and/or by using a wavelength-selective beam splitter (6) in the beam path in such a manner that the UV radiation back-reflected from the glass surface (G) is kept away from the detector unit (2),
- the at least one UV beam source (1) comprises at least one UV light-emitting diode (1a),
- the apparatus comprises means (4, 5, 7, 8) for online monitoring of the UV beam power of the at least one UV light-emitting diode and
- the means (4, 5, 7, 8) for online monitoring of the UV beam power comprise a second fluorescent surface (4, 7) and second detector unit (5, 8), wherein the second detector unit (5, 8) detects the fluorescence radiation emitted by the second surface (4, 7).

2. The apparatus according to claim 1,
**characterised in that**
the UV beam source (1) and the detector unit (2) are aligned relative to the glass surface in such a manner that the detector unit (2) is disposed outside the reflected beam (U').

3. The apparatus according to claim 2,
**characterised in that** the at least one UV light-emitting diode (1a) irradiates the surface (G) at an angle of incidence α > 0 and the detector unit (2) is aligned substantially perpendicularly to the glass surface (G).

4. The apparatus according to claim 2,
**characterised in that** the at least one UV light-emitting diode (1a) irradiates the glass surface (G) at a vanishing angle of incidence (α = 0) and the detector unit is aligned in such a manner that it detects the fluorescence radiation emitted at an angle to the glass surface.

5. The apparatus according to any one of claims 1 to 4, **characterised in that** the light-emitting diode emits in the (1a) UV C range, preferably at about 280 nm or below.

6. The apparatus according to any one of claims 1 to 5, **characterised in that** the beam source (1) has at least one first beam-forming element (1b), in particular a screen and/or collimator lens (1b), wherein the beam-forming element (1b) collimates the beam (U).

7. The apparatus according to any one of claims 1 to 6, **characterised in that** the detector unit (2) comprises a detector element, preferably a photodiode (2a), for converting the radiation (F) into an electrical signal and at least one second beam-forming element (2b), in particular a focussing lens (2b), for focussing the fluorescence radiation (F) onto the detector element (2a) and/or a filter element (2c) for filtering out interfering light.

8. The apparatus according to any one of claims 1 to 7,
**characterised in that** the wavelength-selective beam splitter (6) reflects the UV radiation onto the glass surface (G) and transmits a small fraction of the beam intensity to the means for online monitoring of the UV beam power.

9. The apparatus according to any one of claims 1 to 8,
**characterised in that** the beam source (1) comprises modulation means for modulating the UV radiation emitted by the light-emitting diode (1a).

10. The apparatus according to any one of claims 1 to 9,
**characterised in that** the apparatus comprises electronic evaluation means (3) for producing an electrical signal value characterising the fluorescence intensity.

11. The apparatus according to claim 10,
**characterised in that** in the electronic evaluation means (3) depending on the condition of the glass surface to be studied a first threshold value can be set, below which threshold value the electrical signal value represents a glass surface not occupied by elements.

12. The apparatus according to claim 10 or 11,
**characterised in that**
in the electronic evaluation means (3) depending on the condition of the glass surface to be studied a second threshold value can be set, above which threshold value the electrical signal value represents a glass surface occupied by elements.

13. Use of an apparatus according to any one of claims 1 to 12 for determining the tin side in a float glass product produced in the float process.

## Revendications

1. Dispositif pour la détermination de la présence d'éléments sur une surface de verre (G), en particulier pour la détermination de la présence d'étain contaminant une surface de verre flotté,
- avec au moins une source de rayons UV (1), dont le rayonnement UV incite l'élément à la fluorescence, et
- avec une unité de détection (2) pour la détection du rayonnement fluorescent,
**caractérisé en ce que**
- le guidage du faisceau par orientation de la source de rayons UV (1) et de l'unité de détection (2) par rapport à la surface de verre (G) et / ou la mise en oeuvre d'un diviseur de faisceau (6) sélecteur de longueurs d'ondes est effectué de sorte que le rayonnement UV, retro réfléchi par la surface de verre (G), est maintenu à distance de l'unité de détection (2),
- la source de rayons UV (1) au moins prévue comprend une diode luminescente UV (1a),
- le dispositif comprend des moyens (4, 5, 7, 8) pour la surveillance online de la puissance du faisceau UV de la diode luminescente UV au moins prévue, et
- que les moyens (4, 5, 7, 8) pour la surveillance online de la puissance du faisceau UV comprennent une deuxième surface fluorescente (4, 7) et une deuxième unité de détection (5, 8), sachant que la deuxième unité de détection (5, 8) détecte le rayonnement fluorescent émis par la deuxième surface fluorescente (4, 7).

2. Dispositif selon la revendication 1, **caractérisé en ce que** la source de rayons UV (1) et l'unité de détection (2) sont orientées par rapport à la surface de verre de sorte que la l'unité de détection (2) se trouve disposée en dehors du faisceau (U') réfléchi.

3. Dispositif selon la revendication 2, **caractérisé en ce que** la diode luminescente UV (1a) au moins prévue irradie la surface (G) sus un angle d'incidence α > 0 et que l'unité de détection (2) est sensiblement orientée perpendiculairement à la surface de verre (G).

4. Dispositif selon la revendication 2, **caractérisé en ce que** la diode luminescente UV (1a) au moins prévue irradie la surface de verre (G) sus un angle d'incidence infiniment petit (α = 0) et que l'unité de détection (2) est orientée de sorte qu'elle détecte un rayonnement de fluorescence émis angulairement par rapport à la surface de verre.

5. Dispositif selon l'une des revendications 1 à 4, **caractérisé en ce que** la diode luminescente UV (1a) émet dans le domaine UV C, de préférence à environ 280 nm ou au-dessous.

6. Dispositif selon l'une des revendications 1 à 5, **caractérisé en ce que** la source de rayonnement (1) est dotée d'au moins un élément de formage de faisceau (1b), en particulier d'un diaphragme et / ou d'une lentille de collimateur (1b), sachant que l'élément de formage de faisceau (1b) assure la collimation du faisceau (U).

7. Dispositif selon l'une des revendications 1 à 6, **caractérisé en ce que** l'unité de détection (2) est dotée d'un élément de détection, de préférence d'une photodiode (2a), pour la conversion du rayonnement (F) en un signal électrique, et d'au moins un deuxième élément de formage de faisceau (2b), en particulier d'une lentille de focalisation (2b), pour la focalisation du rayonnement fluorescent (F) sur l'élément de détection (2a) et / ou d'un élément filtrant (2c) pour le filtrage de lumière parasite.

8. Dispositif selon l'une des revendications 1 à 7, **caractérisé en ce que** le diviseur de faisceau sélecteur de longueurs d'ondes (6) réfléchit le rayonnement UV sur la surface de verre (G) est transmet une faible partie de l'intensité du faisceau aux moyens de surveillance online de la puissance du faisceau UV.

9. Dispositif selon l'une des revendications 1 à 8, **caractérisé en ce que** la source de rayons UV (1) est dotée de moyens de modulation pour la modulation du rayonnement UV émis par la diode luminescente UV (la).

10. Dispositif selon l'une des revendications 1 à 9, **caractérisé en ce que** le dispositif est doté de moyens d'évaluation électroniques (3) pour générer une valeur du signal électrique, qui caractérise l'intensité de la fluorescence.

11. Dispositif selon la revendication 10, **caractérisé en ce que**, dans les moyens d'évaluation électroniques (3), en fonction de la constitution de la surface de verre à examiner, peut être réglée une première valeur de seuil, au-dessous de laquelle la valeur du signal électrique représente une surface de verre non occupée par un élément.

12. Dispositif selon revendication 10 ou 11, **caractérisé en ce que**, dans les moyens d'évaluation électroniques (3), en fonction de la constitution de la surface de verre à examiner, peut être réglée une deuxième valeur de seuil, au-dessus de laquelle la valeur du signal électrique représente une surface de verre occupée par un élément.

13. Utilisation d'un dispositif selon l'une des revendications 1 à 12 pour la détermination de la face d'étain dans un produit en verre flotté fabriqué par flottage.
